# EUROPEAN PATENT APPLICATION

(11) **EP 4 733 092 A1**
(43) Date of publication of application: **29.04.2026**
(21) Application number: 25207228.5
(22) Date of filing: 07.10.2025
(51) Int. Cl.: B60C 23/04, B29D 30/00, B32B 25/12, B32B 27/06, B60C 23/06

(54) **INCLUSION OF A SENSOR BASE IN A TIRE**

(30) Priority: 25.10.2024 US 202463711807 P; 25.09.2025 US 202519340381
(71) Applicant: The Goodyear Tire & Rubber Company, Akron, OH 44316 (US)
(72) Inventor: GARN, Benjamin Isaiah, Norton, 44203 (US); ZHAO, Junling, Hudson, 44236 (US); WEST, Jeffrey McKay, Uniontown, 44685 (US); SUH, Peter Jung-min, Copley, 44321 (US)
(74) Representative: Kutsch, Bernd

(57) **Abstract**

A system is disclosed comprising a tire (103), at least one sensor patch (106) cured into an inner side of the tire (103), the sensor patch (106) comprising a bonding layer (136, 136a) and a substrate layer (139) applied to the bonding layer (136, 136a), the substrate layer (139) including one or more sensor connections, and a sensor or sensor component (143) connected to the sensor patch (106) via the one or more sensor connections. Also, an apparatus is disclosed comprising a first layer (136, 136a) of green rubber, a thermoplastic layer (139) calendered onto the first layer (136, 136a) of green rubber, and one or more sensor components (143) engraved into the thermoplastic layer (139). Finally, a method for printing a sensor in a tire is disclosed.

## Description

### BACKGROUND

In many circumstances, it can be beneficial to include various types of sensors in a tire. These sensors can provide real-time data about conditions in and around a tire. Such data can be beneficial in preventing costly incidents such as rapid air loss or flat tires.

### SUMMARY IOF THE INVENTION

The invention relates to a system in accordance with claim 1, to an apparatus in accordance with claim 7, and to a method in accordance with claim 11.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a drawing of a vehicle with one or more tires that include a sensor patch according to various embodiments of the present invention.
FIG. 2 is a perspective cross-sectional view of a tire shown in FIG. 1, prior to installation of the sensor patch according to various embodiments of the present invention.
FIGS. 3A and 3B show examples of the sensor patch according to various embodiments of the present invention.
FIG. 4 shows an example process of manufacturing a sensor patch according to various embodiments of the present invention.
FIG. 5 shows an example process of manufacturing a sensor patch according to various embodiments of the present invention.

### DEFINITIONS

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

### DETAILED DESCRIPTION OF PREFERRED EMBODIMENTS OF THE INVENTION

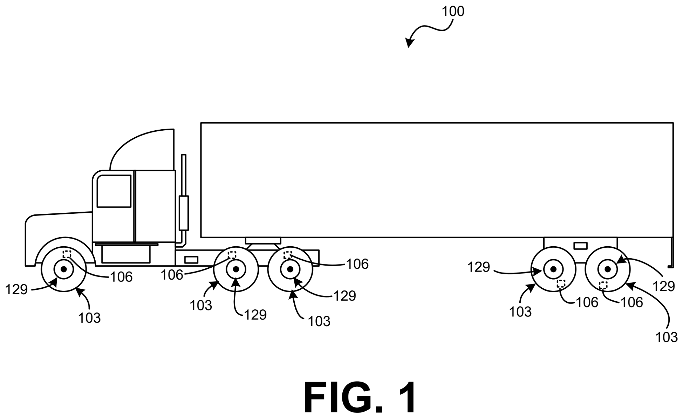

With reference to FIG. 1, a vehicle 100 is shown with one or more tires 103. Each tire 103 can include a sensor patch 106. In some embodiments, the sensor patch 106 can include a sensor or serve as a base to which a sensor can connect. According to various embodiments, each one of the tires 103 on the vehicle 100 may include one or more of the sensor patches 106. While the vehicle 100 is depicted as a commercial truck, the vehicle 100 may comprise any type of vehicle that employs tires where the commercial truck is presented as an example. To this end, the vehicle 100 may comprise other vehicles falling into various categories such as passenger vehicles, off-road vehicles and the like, in which such vehicles include a greater or lesser number of tires 103 than are shown in FIG. 1.

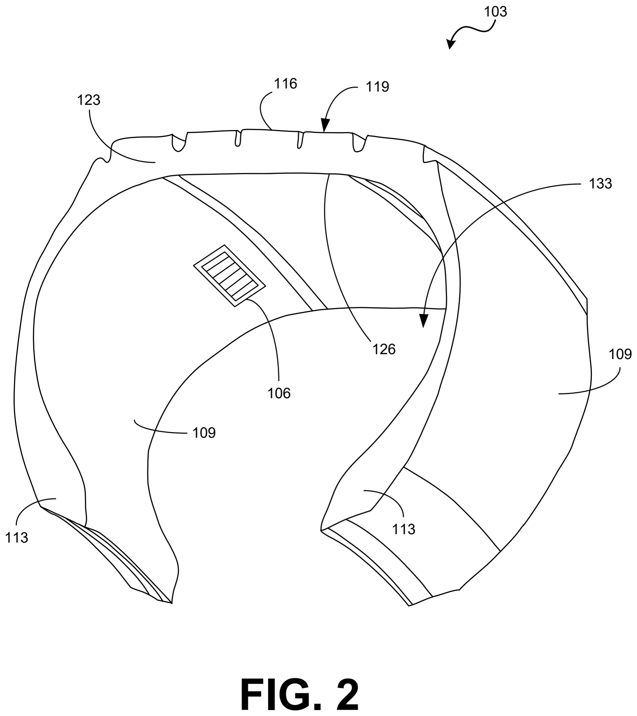

Turning to FIG. 2, shown is a cross-sectional view of the tire 103 according to various embodiments. The tire 103 includes a pair of sidewalls 109, each of which extends radially outwardly from a respective bead area 113 to a ground-contacting tread 116. The tread 116 is formed with multiple tread elements or tread blocks 119. The tire 103 is reinforced by a carcass 123 that toroidally extends from one bead area 113 to the other bead area 113. An innerliner 126 is formed on the inner or inside surface of the carcass 123. The tire 103 is mounted on the flange of a wheel or rim 129 (FIG. 1) forming an internal cavity 133.

According to various examples, the sensor patch 106 can be embedded or simultaneously cured in the tire 103. In some examples, the sensor patch 106 is embedded into a sidewall 109 of a tire 103. However, the sensor patch 106 can be embedded in the innerliner 126, or in the carcass 123 of the tire 103. As shown in FIG. 2, the sensor patch 106 can be disposed in an inner shoulder area of the tire 103 between an underside of the tread 116 and the sidewall 109.

The sensor patch 106 can include circuitry for a variety of different sensors. In some embodiments, the sensor patch 106 includes circuitry for a tire pressure monitoring system (TPMS), a temperature sensor, a strain gauge, or another type of sensor. The sensor patch 106 can include a sensor itself or include various components of a sensor. For example, the sensor patch 106 can comprise a strain gauge, wherein the conductive component is embedded in the sensor patch 106. In some instances, the sensor patch 106 can include a load cell.

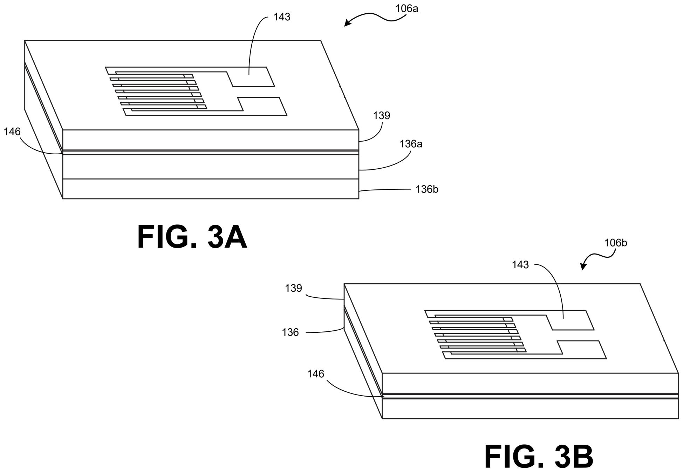

Moving now to FIG. 3A, shown is an example of a sensor patch 106a which includes several layers. In some embodiments, the sensor patch 106a can include at least a first bonding layer 136a and a substrate layer 139. The sensor patch 106a of FIG. 3A includes a first bonding layer 136a and a second bonding layer 136b. The substrate layer 139 can include one or more sensor components 143. The sensor components 143 can be representative of wiring, conductive elements, resistors, capacitors, inductors, transistors, diodes, crystals, relays or other sensor components 143.

In some examples, the bonding layer 136 can be a sheet of green rubber, an uncured or partially cured elastomer sheet, an elastomer/plastic blend, or another material. The first bonding layer 136a can comprise a first material, such as an elastomer sheet, while the second bonding layer 136b can comprise a second material, such as green rubber. However, in some examples, the first bonding layer 136a and the second bonding layer 136b comprise the same material. The substrate layer 139 can be a layer of a plastic material such as nylon, polyimide, polyamide, polyethylene (PE), polyethylene thermoplastic (PET), Polybutylene terephthalate (PBT), Polyethylene terephthalate glycol (PETG), Polytetrafluoroethylene (PTFE), Acrylonitrile butadiene styrene (ABS), *etc.* **In** some examples, the substrate layer 139 can be a piezoelectric energy harvesting structure comprising a piezoelectric material bonded to a flexible substrate. For example, the substrate layer 139 can comprise a metal fil such as gold, chromium, titanium, silver, brass, copper, *etc.,* coated on a plastic material. In another example, the substrate layer 139 can be perovskite on a plastic material. The substrate layer 139 can be layered on top of the first bonding layer 136a.

The material of the substrate layer 139 can be selected based at least in part on the material of the bonding layer 136. In some examples, the material of the bonding layer 136 can be selected based at least in part on the material of the substrate layer 139. The substrate layer 139 and the bonding layer 136 can be selected to have similar surface energies or be partially soluble to encourage bonding at an interface 146 between the layers with or without an adhesive. Similarly, the substrate layer 139 and the bonding layer 136 can be selected such that the functional groups in the respective polymers can have various interactions (ionic, covalent, hydrogen, or metallic bonds, dipole-dipole interactions, *etc*.) to encourage bonding at the interface 146 with or without an adhesive.

In FIG. 3B, shown is an example of a sensor patch 106b which includes several layers. Similar to the sensor patch 106a of FIG. 3A, the sensor patch 106b of FIG. 3B includes a bonding layer 136 and a substrate layer 139. The substrate layer 139 can include sensor components 143. As shown in FIGS. 3A and 3B, the sensor components 143 are wiring for a strength gauge. However, in some examples, the sensor components 143 can be for another type of sensor.

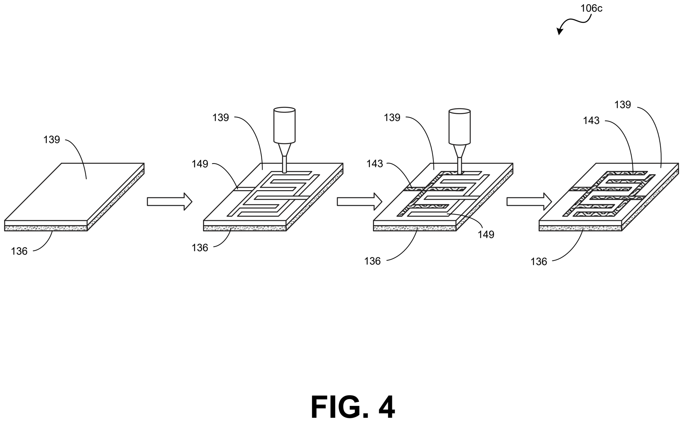

Moving now to FIG. 4, shown is an example process of manufacturing a sensor patch 106c for mounting (or attaching) the sensor patch 106d on the surfaces of a tire. The process shown in FIG. 4 provides merely an example of the many different types of processes which can be employed to manufacture a sensor patch 106. A bonding layer 136 is provided, upon which a substrate layer 139 can be printed, solvent coated, or melted with or without an adhesive or a bonding agent. The substrate layer 139 can be calendered, or melted and pressed, onto the bonding layer 136 to form a base component for the sensor patch 106c. In some examples, the substrate layer 139 can be three-dimensionally (3D) printed onto the bonding layer 136.

Once the bonding layer 136 and the substrate layer 139 are formed together, the sensor patch 106c can be engraved which is optional. In some examples, the substrate layer 139 can be laser engraved, rotary engraved, computed numerically controlled (CNC) engraved, etched, or cut to form an electrical schematic 149. The electrical schematic 149 can comprise an engraved layout for the sensor components 143. In some examples, the electrical schematic 149 can serve as a diagram or outline for various sensor components 143.

Next, after the sensor patch 106c has been engraved, the sensor patch 106c can include one or more sensor components 143 printed into the electrical schematic 149. In some examples, the sensor patch 106c can include one or more sensor components 143 printed directly onto the substrate layer 139 whether engraving has occurred or not. The one or more sensor components 143 can be 3D printed or jet printed, screen printed, flexographically printed, gravure printed, *etc.* onto the substrate layer 139. Printing the sensor components 143 can comprise printing a conductive or semiconductive ink or filament onto the substrate layer 139 or into the electrical schematic 149. After the sensor components 143 have been printed, the manufacturing process of the sensor patch 106c is complete. After the sensor patch 106 has been manufactured, the sensor patch 106 can be embedded, cured, or otherwise attached to a surface of the tire 103. For example, the sensor patch 106 can be mounted, attached via bonding agent, or cured into a tire 103 sidewall 109 or innerliner 126.

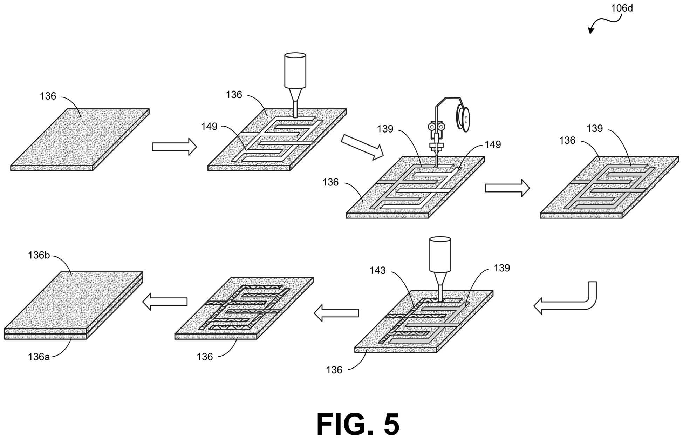

Next, at FIG. 5, shown is another example process of manufacturing a sensor patch 106d by embedding the sensor patch 106d. The process shown in FIG. 5 provides merely an example of the many different types of processes which can be employed to manufacture a sensor patch 106. Beginning with a bonding layer 136, the sensor patch 106d can be manufactured by engraving an electrical schematic 149 into the bonding layer 136. In some examples, the bonding layer 136 can be laser engraved, rotary engraved, computed numerically controlled (CNC) engraved, etched, or cut to form an electrical schematic 149. Similarly to FIG. 4, the electrical schematic 149 of FIG. 5 can comprise an engraved layout for the sensor components 143. In some examples, the electrical schematic 149 can serve as a diagram or outline for various sensor components 143.

After the bonding layer 136 has been engraved, a substrate layer 139 can be printed into the electrical schematic 149. In some examples, the substrate layer 139 can comprise a printable material which can be extruded and 3D printed into the electrical schematic 149. However, according to some examples, the electrical schematic 149 is not previously engraved into the bonding layer 136 and the substrate layer 139 is printed into the shape of an electrical schematic 149 atop the bonding layer 136. The substrate layer 139 can be printed, solvent coated, or melted on the bottom bonding layer 136 with or without an adhesive or a bonding agent.

Once the substrate layer 139 has been applied to the bonding layer 136, the sensor patch 106d can include one or more sensor components 143 applied to the substrate layer 139. In some examples, the one or more sensor components 143 are applied to the substrate layer 139 in the shape of the electrical schematic 149. The sensor patch 106d can include the one or more sensor components 143 3D printed or jet printed, screen printed, flexographically printed, gravure printed, *etc.* Printing the sensor components 143 can comprise printing a conductive or semiconductive ink or filament onto the substrate layer 139 or into the electrical schematic 149. After the sensor components 143 have been printed, a second bonding layer 136b can be added over the top of the sensor components 143, the substrate layer 139, and the first bonding layer 136a. Thus, the sensor patch 106d includes a sensor embedded within bonding layers 136a and 136b. Once the sensor has been embedded, the manufacturing process of the sensor patch 106d of FIG. 5 ends.

In addition to the foregoing, the various embodiments of the present invention include, but are not limited to, the embodiments set forth in the following clauses.

Clause 1 - A system, comprising a tire; a sensor patch cured into an inner side of the tire, the sensor patch comprising, a bonding layer, and a substrate layer applied to the bonding layer, the substrate layer including one or more sensor connections; and a sensor connected to the sensor patch via the one or more sensor connections.

Clause 2 - The system of clause 1, wherein the bonding layer comprises green rubber.

Clause 3 - The system of clause 1 or 2, wherein the substrate layer is a thermoplastic elastomer.

Clause 4 - The system of clause 3, wherein the thermoplastic elastomer is printed onto the bonding layer.

Clause 5 - The system of any of clauses 1-4, wherein the sensor patch is cured into an innerliner of the tire.

Clause 6 - The system of any of clauses 1-5, wherein the sensor patch is cured into a side wall of the tire.

Clause 7 - The system of any of clauses 1-6, wherein the one or more sensor connections are printed into the substrate layer.

Clause 8 - A method for printing a sensor in a tire, comprising providing a bonding layer for a sensor base patch; printing a substrate layer onto the bonding layer; placing the sensor base patch on a green tire; curing the green tire; and attaching a sensor to the sensor base patch.

Clause 9 - The method of clause 8, further comprising coating the bonding layer with an elastomer sheet before printing the substrate layer.

Clause 10 - The method of clause 8 or 9, wherein attaching the sensor to the sensor base patch further comprises laser engraving the substrate layer to form an electrical schematic; and printing one or more sensor components into the electrical schematic.

Clause 11 - The method of any of clauses 8-10, further comprising laser engraving the bonding layer to form an electrical schematic; printing the substrate into the electrical schematic in the bonding layer; and printing one or more sensor components onto the substrate in the electrical schematic.

Clause 12 - The method of clause 11, further comprising layering a second bonding layer over the one or more sensor components.

Clause 13 - The method of any of clauses 8-12, wherein the substrate layer is a thermoplastic.

Clause 14 - The method of any of clauses 8-13, wherein the bonding layer is green rubber of a tire.

Clause 15 - An apparatus, comprising a first layer of green rubber; a thermoplastic layer calendered onto the first layer of green rubber; and one or more sensor components engraved into the thermoplastic layer.

Clause 16 - The apparatus of clause 15, further comprising a second layer of green rubber layered over the thermoplastic layer.

Clause 17 - The apparatus of any of clauses 15-17, wherein the layer of green rubber is engraved with a sensor schematic.

Clause 18 - The apparatus of any of clauses 15-18, further comprising a second layer of green rubber layered between the first layer of green rubber and the thermoplastic layer.

Clause 19 - A system comprising a green tire; and the apparatus of any of clauses 15-18, wherein the layer of green rubber is affixed to the green tire before curing.

Clause 20 - The system of clause 19, further comprising a sensor attached to the apparatus of any of clauses 15-18.

## Claims

1. A system comprising a tire (103), at least one sensor patch (106) cured into an inner side of the tire (103), the sensor patch (106) comprising a bonding layer (136, 136a) and a substrate layer (139) applied to the bonding layer (136, 136a), the substrate layer (139) including one or more sensor connections, and a sensor or sensor component (143) connected to the sensor patch (106) via the one or more sensor connections.

2. The system of claim **Error! Bookmark not defined.,** wherein the bonding layer (136, 136a) comprises green rubber and/or wherein the substrate layer (139) is a thermoplastic elastomer, the thermoplastic elastomer being preferably printed onto the bonding layer (136).

3. The system of claim **Error! Bookmark not defined.** or 2, wherein the sensor patch (106) is cured into an innerliner (126) of the tire (103); and/or wherein the sensor patch (106) is cured into a side wall (109) of the tire (103).

4. The system of at least one of the previous claims, wherein the one or more sensor connections are printed into the substrate layer (139).

5. The system of at least one of the previous claims, further comprising a further layer (136b), preferably a green rubber layer or a green rubber layer engraved with a sensor schematic, over the substrate layer (139).

6. The system of claim 5, wherein the further layer (136b) is layered between the bonding layer (136, 136a) and the substrate layer (139).

7. An apparatus comprising a first layer (136, 136a) of green rubber, a thermoplastic layer (139) calendered onto the first layer (136, 136a) of green rubber, and one or more sensor components (143) engraved into the thermoplastic layer (139).

8. The apparatus of claim 7, further comprising a second layer (136b) of green rubber layered over the thermoplastic layer (139) or layered between the first layer (136, 136a) of green rubber and the thermoplastic layer (139); and/or wherein the first or second layer of green rubber (136, 136a, 136b) is engraved with a sensor schematic.

9. The apparatus of claim 7 or 8, wherein the first layer of green rubber (136, 136a) and/or the second layer of green rubber (136b) is affixed to a green tire before curing.

10. The apparatus of at least one of the claims 7 to 9, further comprising a sensor or sensor component (143) attached to the apparatus.

11. A method for printing a sensor in a tire, the method comprising: providing a bonding layer (136, 136a) for a sensor base patch (106), preferably a green rubber layer for a tire (103); printing a substrate layer (139), preferably a thermoplastic, onto the bonding layer (136, 136a); placing the sensor base patch (106) on a green tire; curing the green tire; and attaching a sensor or sensor component (14) to the sensor base patch (106).

12. The method of claim 11, further comprising coating the bonding layer (136a, 136) with an elastomer sheet (136b) before printing the substrate layer (139).

13. The method of claim 11 or 12, wherein attaching the sensor or sensor component (143) to the sensor base patch (106) comprises laser engraving the substrate layer (139) to form an electrical schematic, and printing one or more sensor components (143) into the electrical schematic.

14. The method of at least one of the claims 11 to 13, further comprising laser engraving the bonding layer (136, 136a) to form an electrical schematic, printing the substrate into the electrical schematic in the bonding layer (136, 136a), and printing one or more sensor components (143) onto the substrate (139) in the electrical schematic.

15. The method of at least one of the claims 11 to 14, further comprising layering a second bonding layer (136b) over the one or more sensor components (143).
